(19) Europäisches Patentamt
European Patent Office
Office européen des brevets

(11) **EP 3 191 334 B1**

(12) **EUROPEAN PATENT SPECIFICATION**

(45) Date of publication and mention
of the grant of the patent:
**21.11.2018 Bulletin 2018/47**

(51) Int Cl.:
***B60K 7/00*** *(2006.01)*     ***B60K 1/04*** *(2006.01)*
***B60K 17/356*** *(2006.01)*     ***B60K 23/08*** *(2006.01)*

(21) Application number: **15775067.0**

(22) Date of filing: **28.08.2015**

(86) International application number:
**PCT/BE2015/000040**

(87) International publication number:
**WO 2016/037241 (17.03.2016 Gazette 2016/11)**

(54) **CONCEPT FOR AN ELECTRICALLY DRIVEN VEHICLE**

KONZEPT FÜR EIN ELEKTRISCH ANGETRIEBENES FAHRZEUG

CONCEPT POUR UN VÉHICULE À ENTRAÎNEMENT ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2014 BE 201400672**

(43) Date of publication of application:
**19.07.2017 Bulletin 2017/29**

(73) Proprietor: **Altreonic Naamloze Vennootschap 3210 Linden (BE)**

(72) Inventor: **VERHULST, Eric**
**B-3010 Leuven (BE)**

(74) Representative: **Donné, Eddy et al**
**Bureau M.F.J. Bockstael nv.**
**Arenbergstraat 13**
**2000 Antwerpen (BE)**

(56) References cited:
**EP-A1- 0 415 830**     **WO-A1-2012/141591**
**DE-A1- 19 860 562**     **US-A- 5 373 909**
**US-A1- 2007 199 748**     **US-A1- 2012 185 129**
**US-B2- 8 397 844**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Concept for an electrically driven vehicle.
The present invention relates to a concept for an electrically driven vehicle.
Current vehicles are developed as a monolithic structure with a basic structure with four or more wheels and a motor mounted on a one-piece supporting structure and thereon a superstructure in the form of a chassis according to a desired model that is not adjustable.
A disadvantage of such vehicles is that the possibilities for modification are limited to the choice of the motor, the furnishing and finish, and the choice of a number of accessories.
The choice of the type of vehicle and the capacity then also depends on the use that is to be made of it, for example as personal vehicle for one person, as a private vehicle or for the transport of persons or goods.
The choice made is fixed for the rest of the life of the vehicle and is only modifiable to a limited extent.
Another disadvantage of the known vehicles relates to safety while driving, whereby the failure of one or another critical component of the steering and braking circuit can lead to serious accidents.
A concept for an electrically driven vehicle according to the preamble of claim 1 is known from US 8 397 844 B2.
The purpose of the present invention is to provide a solution to one or more of the aforementioned and other disadvantages.
To this end the invention concerns a concept for an electrically driven vehicle, consisting of a basic platform with wheels and a superstructure affixed thereon with operating controls for steering, controlling the speed and braking, with the characteristic that the concept is based on being able to compose at least the basic platform with a limited number of types of modules and being able to modulate its width and length, whereby it is based on modules with a housing that can be connected together sideways on one or both sides along the width of the vehicle to be composed into rigid or articulated segments of two or more modules and which are provided with connecting means to connect two or more of the aforementioned segments along the length of the vehicle behind one another and to hingeably connect them together in pairs in a fixed way or by means of a central articulation and whereby at least four modules are constructed as wheel modules, each with one wheel and a spring for this wheel, and whereby at least two of these wheel modules are constructed as a drive module, each with its own electricity supply; an electric motor for driving the wheel; a specific independent motor controller with a position/movement sensor connected thereto for controlling the motor concerned as a function of the signals or data originating from the operating controls and from the movement sensor and possibly from other drive modules that are connected thereto.
An advantage of the modular structure and the modular control is that, depending on the requirement, the configuration of a vehicle can be composed and modified at a later stage of the life of the vehicle by the addition, replacement or omission of certain modules in order to modify the vehicle according to its width, length, available power, range by changing the capacity of the supply in the form of more batteries or similar, and the function of the vehicle can also be modified according to the desired application for passenger transport, goods transport or for another utility use.
For example the width of the vehicle can be modulated by means of one or more intermediate modules that are affixed between the wheel modules or drive modules of a segment, with an articulation or by a hinge or otherwise.
The length of the vehicle can be adjusted by adding segments behind one another and connecting them together, with an articulation or by a hinge or otherwise.
In this way a vehicle can evolve over time with the needs of its owner, temporarily or otherwise, going from a one-person vehicle to a passenger vehicle with a number of passenger places, and to a vehicle for public transport of ten people or more or to a vehicle for goods transport or similar.
Because the drive modules are standardised, for example, and also have everything on board for an independent drive, they are mutually exchangeable such that they enable cost-efficient vehicles to be assembled making use of a limited number of types of modules, such that the number of components to be stored, and thus the storage costs, are lower than in the conventional vehicle industry.
Repairs are easier because it is sufficient just to replace one module with another, such that the immobilisation time due to breakdown is limited. A defective module can also be calmly examined and repaired in the workplace, for example in a system of exchange modules.
Another advantage is that the electronic and software construction of the control system can be reused from one configuration to another.
By each drive module having the necessary architecture on board to be able to communicate with other drive modules and can also take over the control of other drive modules, for example in the event of a fault in such a module, this fosters safety during driving as the failure of one module does not necessarily lead to a serious accident on account of uncontrollability.
Specific application-oriented functions can be added by adding separate modules.
The transport capacity can be expanded by combining a number of identical vehicle units.
Preferably, but not necessarily, at least the drive modules are provided with the necessary standardised connectors for externally bringing about a standardised cable connection between the motor controller of the drive module concerned and the signals that originate from the operating controls of the superstructure and for the connection between the motor controller of the drive module concerned and the motor controller of another drive module.

In this way the modules of each segment mutually and the modules in different segments mutually can be easily connected together, as well as to the operating controls in the superstructure for data transfer and connecting the supply sources for the power supply of the modules and superstructure, and a balanced utilisation of the available capacity of the batteries or to foster the recharging of the batteries at a charging station.

Preferably, but not necessarily, a suspension of the CHRISTIE type can be used as a suspension that has the characteristic of being compact and flexible and can accommodate large relief differences in the road surface or terrain.

A simple hinge with one or more degrees of freedom can suffice in that case to be able to connect the segments of the vehicle together and to enable hingeing around an axis perpendicular to the road surface.

The wheels of the wheel and drive modules can be equipped with tyres or equipped with caterpillar track wheels for caterpillar tracks of a tracked vehicle.

Preferably the motor controller of the drive modules is programmed for different drive modes such as front-wheel or back-wheel drive, four-wheel drive or multiple-wheel drive, whereby all drive wheels essentially always turn in the same direction, or such as a skid steer drive or caterpillar drive whereby the drive wheels on the one and the other side of the vehicle can be driven in the same direction and in the opposite direction thanks to independent control of the wheels.

With the intention of better showing the characteristics of the invention, a few preferred embodiments of a vehicle that is composed according to the concept of the invention are described hereinafter by way of an example, without any limiting nature, with reference to the accompanying drawings, wherein:

figure 1 schematically shows a perspective view of a vehicle according to the concept of the invention;
figure 2 shows a top view of the basic platform indicated in figure 1 by F2, with partial omission;
figure 3 shows a side view of the basic platform according to arrow F3 of figure 2;
figure 4 shows a perspective view of a drive module as indicated by F4 in figure 2;
figure 5 shows the drive module of figure 4, without housing;
figures 6 and 7 show two variants of a vehicle that is composed according to the concept of the invention;
figure 8 shows a top view such as that of figure 2 but for the vehicle of figure 7;
figure 9 shows a block diagram of the electronic section of the vehicle of figure 1;
figures 10 and 11 show the electronic block diagram of the section indicated by F10 and F11 respectively in figure 9;
figure 12 shows the general control principle that is applied in the block diagram of figure 11;
figure 13 shows the control principle of figure 12 in more detail;
figure 14 shows a variant embodiment of a vehicle according to the invention.

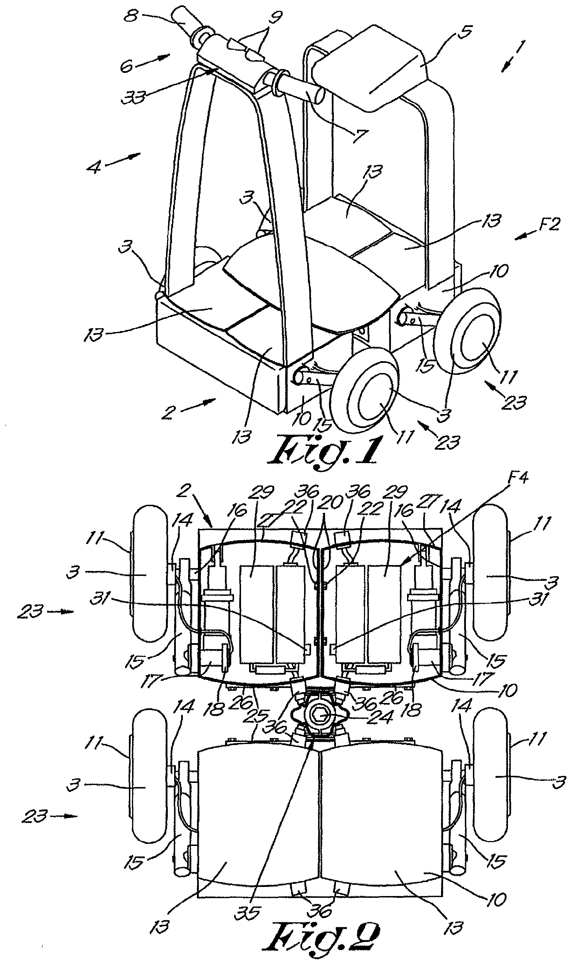

The electric vehicle shown in figure 1 is composed of a basic platform 2 with four wheels 3 with pneumatic tyres and a superstructure 4 affixed thereon with a seat 5 for a driver and operating controls, such as a steering wheel 6 with an accelerator handle 7 and a brake handle 8, as well as an instrument panel 9 for reading off the speed, the charge status of the batteries and other operational parameters of the vehicle.

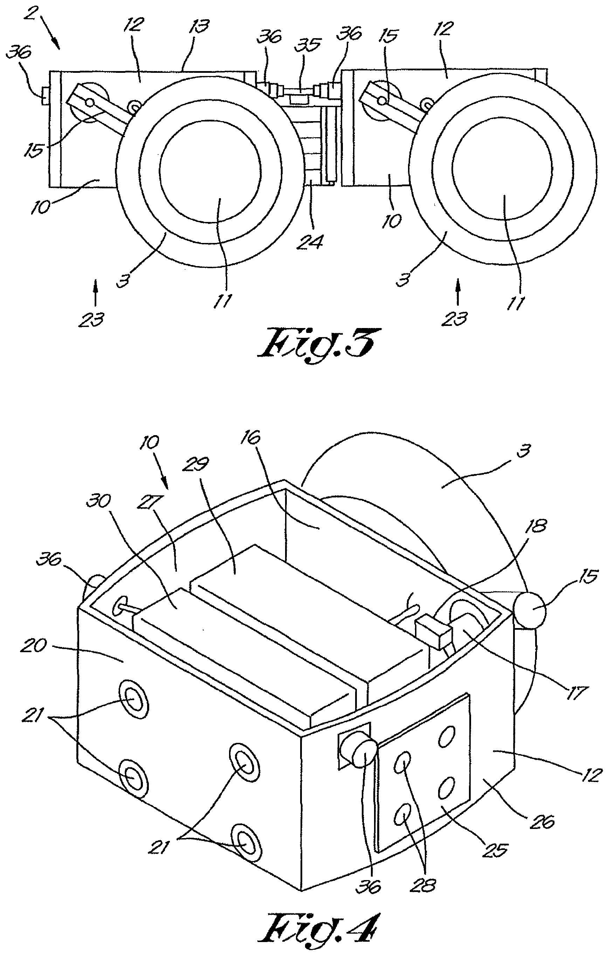

In the example of figures 1 to 2, the basic platform 2 is composed of four drive modules 10 as shown separately in figure 4, each with one wheel 3 provided with a built-in direct current electric motor 11.

Each drive module 10 is provided with a housing 12, in this case in the form of a box that can be closed by means of a cover 13.

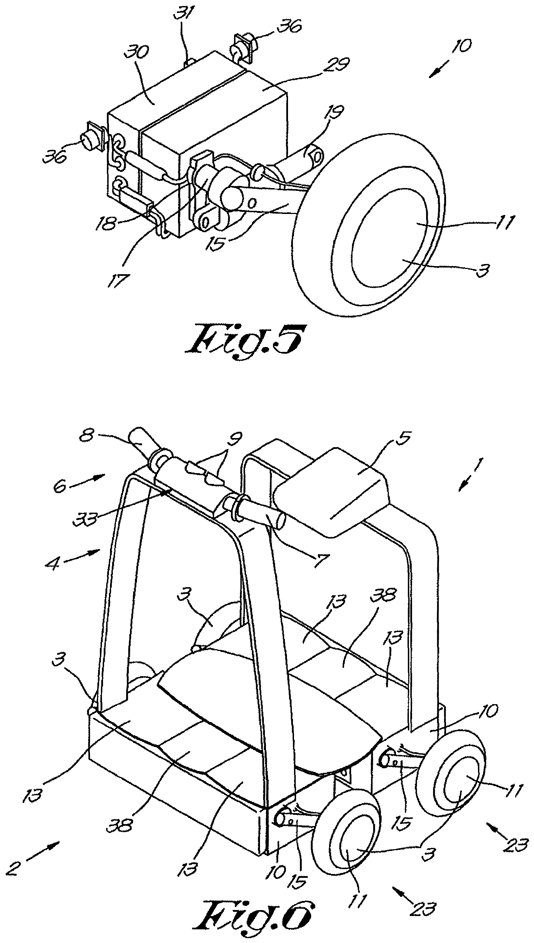

As can be seen in figures 4 and 5, the wheel 3 with motor 11 of the drive module is fastened by means of a shaft 14 to the end of a suspension arm 15 that is turnably affixed by its other end, by means of a torsion shaft 17, around a horizontal axis on a sidewall 16 of the housing 12, whereby a lever 18 is fastened on this torsion shaft 17 that is suspended by means of a gas spring or other spring 19. Such a sprung suspension is known as a CHRISTIE type of suspension.

The four drive modules 10 are identical save for the fact that the drive modules 10 for the left and the right wheels are constructed symmetrically with regard to the positioning of the wheels and the suspension.

On the sidewall 20 opposite the sidewall 16 four passages are provided for the side-to-side mechanical fastening together of the drive modules 10 or other modules by means of bolts 22 or similar to form a rigid segment 23 with two wheels 3 that extends along the width of the vehicle.

In the example the four drive modules 10 are connected together two-by-two to form two segments 23 that are mutually hingeably connected together by means of a central hinge 24 with a vertical hinge axis or another type of articulation that is affixed between the segments by means of fastening plates that are affixed against the front walls 26 and rear walls 27 respectively of the drive modules 10 by means of bolts or similar that are screwed into threaded passages 28 in these walls 26-27.

In the housing 12 of each drive module a supply 29 is further provided for the motor 11, preferably in the form of a chargeable battery 29 or alternatively in the form of a fuel cell, and a motor controller 34 for controlling the motor 11, whereby this motor controller 30 is connected to the battery 29 for its supply.

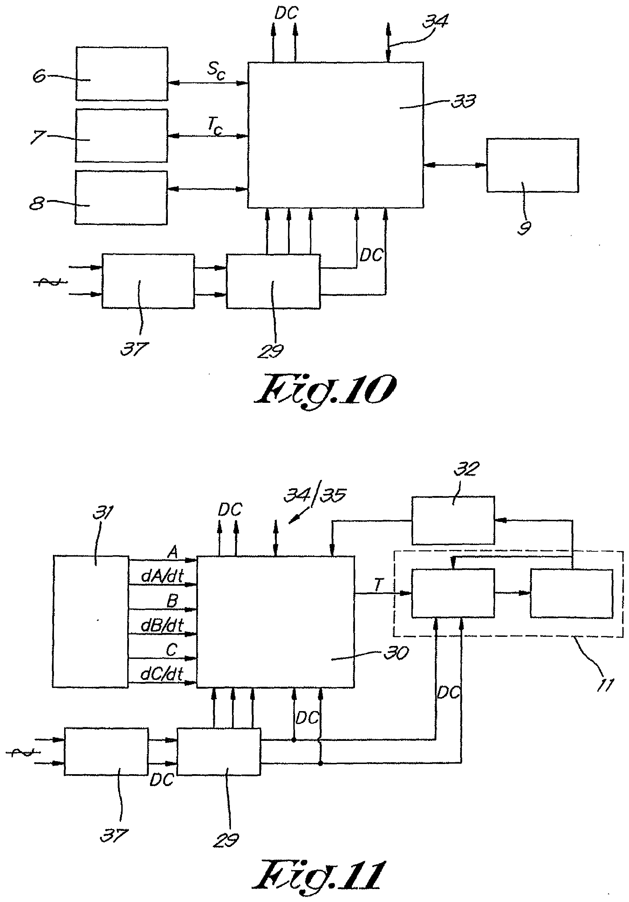

Furthermore, each drive module is equipped with a position/movement sensor 31 that measures the instantaneous position and movement of the module, for example by measuring the slew angle, as well as the inclination angle and inclination rate, as well as the roll angle and roll rate, whereby this movement sensor 21 is connected to the motor controller 30 as shown in the block diagram of figure 11.

The drive module 10 also comprises a speed sensor 32 for determining the rotational speed of the wheel 3 or the motor 11 of the module 10 concerned, whereby this speed sensor 32 is also connected to the motor controller 30 as shown in figure 11.

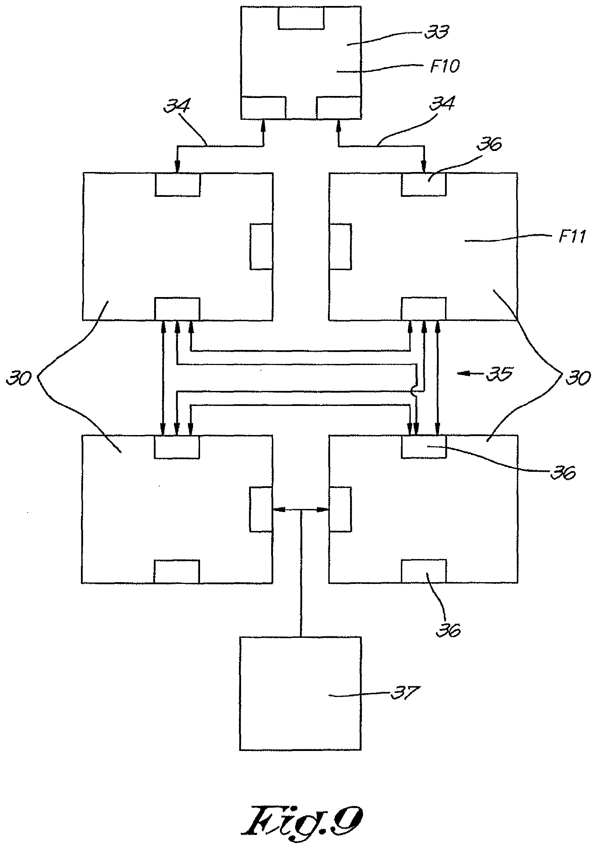

The vehicle is controlled in an electronic software manner, whereby the electric signals originating from the operating controls 6, 7 and 8 are passed on to the motor controllers 30 in the drive modules 10 via an 'HMI' or human-machine interface 33 in the instrument panel, after they have been converted into digital data that are sent over a data connection cable 34 to the motor controllers 30, as illustrated on the basis of figures 9 and 10, whereby it is clear from figure 9 that the data are passed on via two cables 34 to the two front drive modules 30, whereby these data are further distributed mutually among one another and to the rear drive modules 30 via cable connections 35 that form a connection between the four modules via standard connectors 36 with which the drive modules 10 are equipped at the front and back and which are connected to the motor controllers 30.

The data transmission cables can be glass fibre cables or Ethernet cables for example.

Due to the multitude of cable connections a network of connections is realised through which all data originating from the HMI interface 33 are distributed among all individual motor controllers 30 of the drive modules 10, so that each motor controller 30 has all these data available to it.

Data from the sensors 31 and 32 of the drive modules 10 and from the control signals of each motor controller 30 for the control of the motors 11 are mutually exchanged via the same data cables 35 so that each drive module 10 has the necessary data available to it to be able to control all four motors 11,

This fosters the safety of the data transfer in the event of the failure of one or another component or cable connection 34-35 on the basis of the redundancy principle.

The data originating from the motor controllers 30 are also fed back to the HMI interface 33 that processes these data into readable parameters and possible warnings on the instrument panel 9.

Preferably the supplies 29 of the drive modules 10 are connected together and to the HMI interface 33 so that the power consumption from the different supplies 29 can be optimally distributed as a function of the available battery capacity of each supply 29, so that an adequate supply is always ensured when, for example, one or another battery 29 is completely discharged or defective, which again fosters safety.

In the same way all batteries 29 can be charged from the same charging station or charger 37 if necessary, whereby the charging station is connected to the charger 37 via a free connector 36 at the front or back of the vehicle 1 for example.

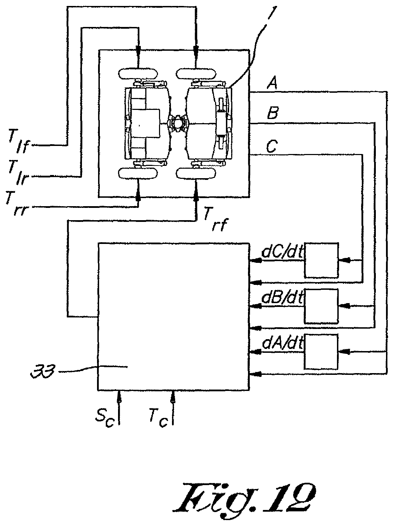

The generic principle on which the control of each motor controller 30 is based is illustrated with a conventional feedback loop on the basis of the simplified block diagram of figure 12 in which the vehicle of figure 1 is presented by 1 with four independently driven wheels 3 and a central articulation 24 and in which the motor controller 30 is the one of the front right drive module and the symbols used have the following meanings:

| | |
|---|---|
| Sc | input from steering mechanism; |
| Tc | input from accelerator handle; |
| A | slew angle of module; |
| B | roll angle of module; |
| C | inclination angle of module; |
| dA/dt | slew rate of module; |
| dB/dt | roll rate of module; |
| dC/dt | inclination rate of module |
| Trf | required torque of the front right motor; |
| Tlf | required torque of the front left motor; |
| Trr | required torque of the rear right motor; |
| Tlr | required torque of the rear left motor. |

The motor controller 30 concerned of the front right drive module 10 calculates the required torque Trf that is applied as an input to the drive motor 11 of the module concerned and also calculates the required torque Txy (x= l or r; y= f or r) of the other drive modules that are fed back to the motor controllers 30 of the other drive modules 10.

A simplified formula for determining the required torque is as follows:

$$Txy = Tc*K5 + Sc*K3 - (B*K1 + dB/dt*K2) - (C*K6 + dC/dt*K7)$$

in which K1 to K7 are gain coefficients that are configured during design in real time depending on the operating mode, operating conditions or preferences of the driver.

These coefficients can have a positive, negative or zero value depending on the relative position of the drive module 10 concerned within the configuration of the vehicle as well as the desired operating mode, as set out hereinafter.

The basic principle of the motor controller 30 is to impose a torque Txy on the wheels in response to the Sc and Tc commands coming from the operating controls.

The torque imposed on the wheels as a function of the command Tc from the accelerator handle 7 can be adjusted by adjusting the K5 coefficient. In order to dynamically steer the vehicle, a difference in instantaneous speed between the wheels 3 on the right side and the wheels 3 on the left side of the vehicle 1 is required. The magnitude of the difference in instantaneous speed determines the slew rate according to the following formula:

$$dA/dt = (Vl - Vr) / d$$

where

Vl     instantaneous speed of the left wheels
Vr     instantaneous speed of the right wheels
d     wheel base or sideways distance between the contact points of a left and right wheel of a segment 23.

In view of the fact that the instantaneous linear speed Vv of the vehicle is equal to the average of the speeds Vl and Vr, the resulting radius R of the turning circle satisfies the following formula:

$$R= Vv / (dA/dt)$$

In order to change the instantaneous linear speed of the left and right drive modules, an additional component of the applied torque is added that is a function of the steering command Sc imposed by the driver.

The sign of K3 depends on the position of the drive module 30 on the left or the right side of the vehicle and on a preagreement of the sign corresponding to a steering command to the left or the right, for example for a steering command Sc to the left it is agreed to apply a negative coefficient K3 for the left drive modules 30 and a positive coefficient K3 for the right drive modules 30.

In addition with respect to the traditional dynamic steering logic, the steering can also constitute adaptive steering characteristics to maintain the centre of gravity stability both in inclination and in roll. In this context "centre of gravity stability" means the operational situation in which the intersection of the resultant of the acceleration vector (including gravity and the vehicle acceleration) intersects the plane that connects the contact points of the wheels to one another within the frame defined by the aforementioned contact points of the four wheels.

In order to preserve the centre of gravity stability in the inclination direction a correction of the torque is required that depends on the inclination angle C and its derivative dC/dt. This correction is used to generate a counter torque around the centre of gravity to maintain the stability.

This results in the aforementioned simplified formula for the required torque Txy with the coefficients K6 and K7, whose values determine the sensitivity for generating the counter-torque and depend on the rotational inclination-inertia around the centre of gravity of the vehicle 1 and the useful load combined.

The centre of gravity stability of the roll direction as used in this description is only important for counteracting the dynamic centrifugal forces that occur when taking a bend and which can result in the overturning of the vehicle. This requires a correction of the required torque that is a function of the roll angle B and its derivative dB/dt. The sensitivity for the application of this correction is determined by the coefficients K1 and K2 in the aforementioned formula for the required torque Txy, and is a function of the roll inertia of the vehicle and its useful load.

Depending on the configuration of the vehicle 1, vehicles can be obtained with a different width and wheelbase d.

Figure 6 shows a configuration of vehicle 1 for example in which intermediate modules 38 are fastened between the drive modules of the segments 23 and 24 that make the machine wider and which are essentially formed by a housing whose space can be used according to desire as luggage space, space for extra batteries and similar.

A wider wheelbase d results in a smaller slew rate dA/dt for the same linear speed Vl and Vr of the wheels 3, as shown by the above formula for the slew rate dA/dt and this gives rise to a larger turning circle as shown by the above formula for the radius R of the turning circle.

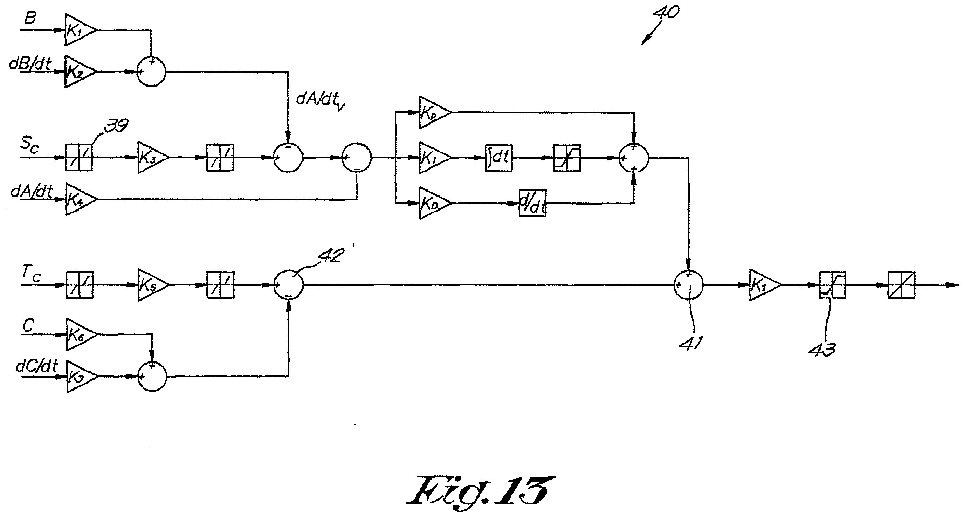

In order to take account of such configuration differences a control system can be applied, as illustrated on the basis of the diagram of figure 13.

A steering command Sc from the driver results in a desired slew rate dA/dt. Due to a closed loop control relating to the slew rate dA/dt, the control system is able to take account of motor performances and differences in configuration.

A deadband 39 is defined for the steering command to create a certain neutral zone around the neutral position of the steering wheel in which the steering command has no effect.

On account of safety, a maximum is imposed on the rate with which the imposed steering command Sc may vary in the following way.

The roll angle B and the roll rate dB/dt are used together with the steering command Sc to determine the desired slew rate. An error difference is calculated by deducting the measured roll rate from the desired roll rate and is fed to a PID controller 40.

The calculation of the desired slew rate incorporates the measured roll angle and its time derivative in a way to reduce the desired slew rate, given that the measured slew rates is positive when turning the steering wheel 6 clockwise.

In this way the roll stability is maintained when taking a bend by adapting the desired slew rate as a function of the desired roll angle.

The output from the PID controller 40 is added in 41 to the value of the nominal torque from which the correction for the inclination stability is first deducted in 42.

The value of the resulting torque is limited in 43 to a preset maximum allowed safety value.

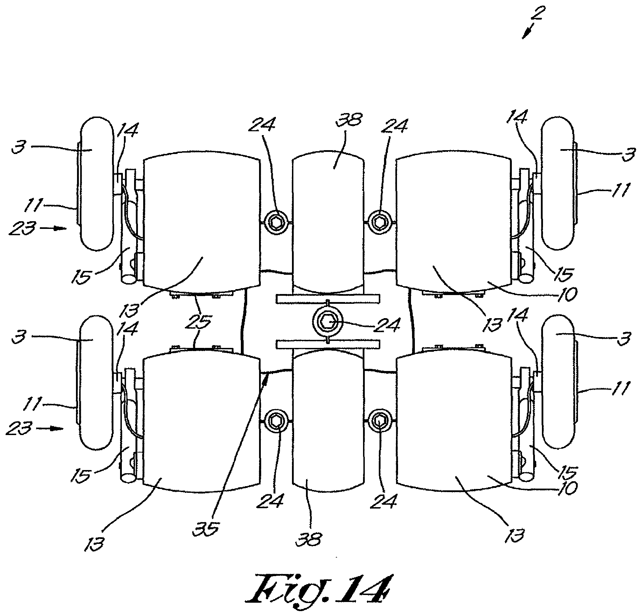

Figure 14 shows a variant embodiment of a modularly structured vehicle according to the invention, whereby in this case not only are the segments 23 hingeably connected together but the drive modules 10 are also hingeably connected sideways, for example to an intermediate module 38. In this case, if need be the segments 23 can also be rigidly connected together.

This figure 14 also shows that the connectors 36 are optional and that the alternative is possible that motor controllers 30 of the drive modules 10 are connected together by means of cable connections 35 that are connected directly to the motor controllers 30 via openings in the housings 12.

It is clear that with an adjustable concept according to the invention, a safe and fault tolerant system is developed to compose vehicles 1 whose dimensions, capacity, functions and similar are adjustable, and this with a limited number of types of modules 10, 38, a universal hinge and cable connections 35.

It is also clear that a vehicle 1 according to the modular concept of the invention does not necessarily have to have four independently driven wheels 3, but that only two drive modules 10 can also suffice, whereby in this case the other wheel modules are constructed identically to the drive modules 40, with the difference that they are not provided with a motor and motor controller.

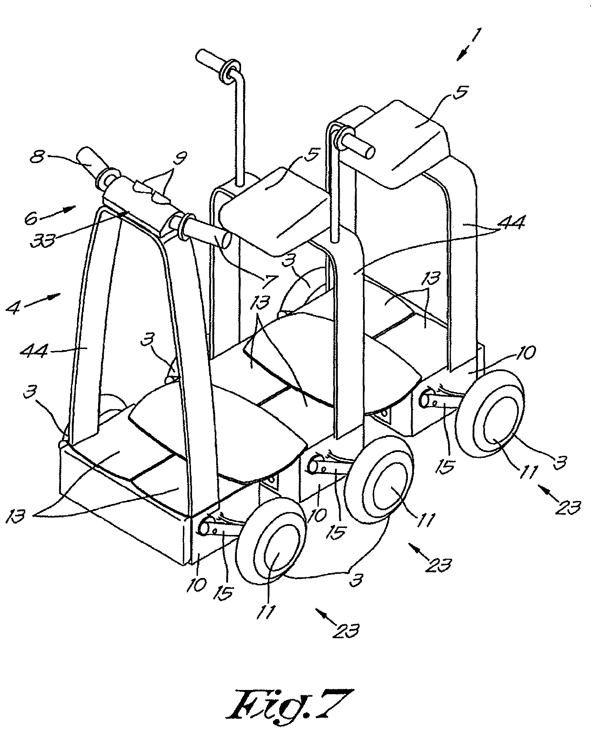

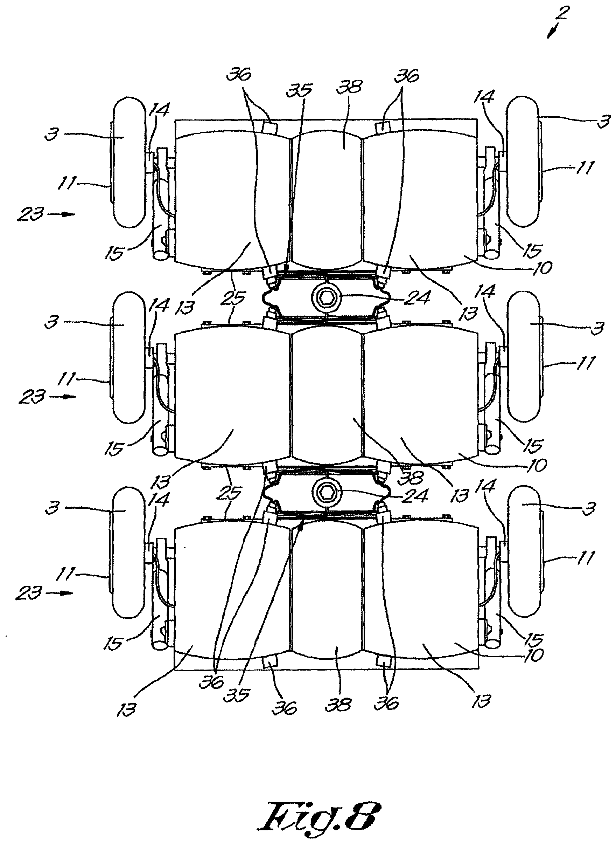

By hingeably connecting a number of segments 23 together, vehicles 1 of an adjustable length can be assembled. Figures 7 and 8 show an example of them, whereby with respect to the vehicle of figure 6 with two segments 23 an extra third segment 23 is added with an extra seat 5 thereon for a passenger. In this case two, four or six of the wheel modules are constructed as drive modules 10, while the other modules do not contain a motor 11.

If need be, the centre segment can be constructed without wheels. The modules of this centre segment 23 can be used as luggage space or similar.

The arches 44 that are affixed to the superstructure to support the operating controls 6, 7, 8 and the seats can for example be width-adjustable, for example with a telescopic construction, such that they can easily be adapted to the desired configuration of the vehicle 1.

The construction of a roof or a closed chassis is of course among the possibilities.

With regard to the drive modules, other embodiments are possible, for example with a motor 11 in the housing instead of in the wheel or with another type of suspension or similar.

Two or more wheels on each side of the vehicle 1 can be provided with a caterpillar track to realise a tracked vehicle, whereby in this case at least two wheels must be driven traction wheels with toothing, while the other wheels can be undriven accompanying support wheels for the caterpillar track.

By using larger modules, vehicles can be configured that are suitable for larger loads, for example for the transport of goods or use in rough terrain.

The concept is thus scalable according to the load and along its length to leave space for larger capacities.

A small modular vehicle according to the invention can be adapted for use in different modes, for example starting as a small single person vehicle, then for use as a passenger car by adding modules up to a mass transport system by electronically connecting a number of vehicles according to the invention together and to be able to travel in groups, for which the invention is extremely suitable due to the inherent safety of the concept with an architecture of multiple duplication of the control systems that can take over the roles from one another in the event of a fault in one or another crucial component or similar.

The redundancy principle can be departed from, whereby a motor controller 30 does not necessarily have to take over the control of other motor controllers 30 in the event of a fault or similar.

The present invention is by no means limited to the embodiments described as an example and shown in the drawings, but a vehicle that is composed according to the concept of the invention can be realised in all kinds of forms and dimensions without departing from the scope of the invention as defined by the appended claims.

**Claims**

1. Concept for an electrically driven vehicle, consisting of a basic platform (2) with wheels (3) and a superstructure affixed thereon with operating controls (7, 8, 9) for steering, controlling the speed and braking, **characterised in that** the concept is based on being able to compose at least the basic platform (2) with a limited number of types of modules (10, 38) and being able to modulate its width and length, whereby it is based on modules (10, 38) with a housing (12) that can be connected together sideways on one or both sides along the width of the vehicle (1) to be composed into rigid or articulated segments (23) of two or more modules and which are provided with connecting means to connect two or more of the aforementioned segments (23) along the length of the vehicle behind one another and to hingeably connect them together in pairs in a fixed way or by means of a central articulation (24) and whereby at least four modules (10) are constructed as wheel modules, each with one wheel (3) and a spring (15, 17, 18, 19) for this wheel (3), and whereby at least two of these wheel modules (10) are constructed as a drive module (10), each with its own electricity supply (29); an electric motor (11) for driving the wheel (3); a specific independent motor controller (30) with a position/movement sensor (31) connected thereto for controlling the motor (11) concerned as a function of the signals or data originating from the operating controls (6, 7, 8) and from the movement sensor (31) and possibly from other drive modules (10) that are connected thereto.

2. Concept according to claim 1, **characterised in that** the vehicle is width-adjustable by means of one or more intermediate modules (38) that are affixed between the wheel or drive modules (10) of a segment (23).

3. Concept according to claim 2, **characterised in that** one or more intermediate modules (38) are formed by a housing (12) that can be arranged as a battery compartment for extra supply, as a luggage compartment, for sensors or similar.

4. Concept according to claim 1, **characterised in that** each drive module (10) is provided with the necessary connectors (36) to bring about an external cable connection (35) between the motor controller (30) of the drive module (10) concerned and the signals or data that originate from the operating controls (6, 7, 8) and for the connection between the motor controller (30) of the drive module (10) concerned and the motor controller (30) of one or more other drive modules (10).

5. Concept according to claim 4, **characterised in that** the cable connections (35) and connectors (36) are equipped to exchange signals or data between the motor controllers (30) of the drive modules (10) mutually, and between the motor controllers (30) and a central controller of a human-machine interface (33) that converts the signals from operating controls (6, 7, 8) into data for the motor controllers (30) and processes the data from the drive modules (10) into readable data relating to the operational situation and safety of the vehicle (1) such as speed, consumption, remaining capacity of the supplies, skid hazard, faults and similar.

6. Concept according to claim 5, **characterised in that** the aforementioned cable connections (35) and connectors (36) are provided to also mutually connect the supplies (19) together in order to distribute the power consumption of the vehicle (10) and/or the charge current originating from an external charging station or charger (37) among the available supplies (19).

7. Concept according to claim 5 or 6, **characterised in that** each drive module (10) is provided with two connectors (36) that are connected to the motor controller (30) for bringing about a data and electricity connection, respectively to any segment (23) at hand and/or to any segment (23) behind and/or to a human-machine interface (33) and/or to a charging station or charger (37) for the supplies.

8. Concept according to any one of the claims 5 to 7, **characterised in that** each motor controller (10) is provided with an algorithm to be able to determine, outbound from the data originating from the human-machine interface (33) and from other motor controllers (10), the required torque and to control the motor controllers (10) of other drive modules (10) that are connected thereto, such that in the event of a fault or poor operation of a motor controller (10), another motor controller (10) can take over the role of the faulty or poorly operating motor controller (10).

9. Concept according to claim 8, **characterised in that** the aforementioned algorithm takes account of the control commands imposed by the driver by means of the operating controls (6, 7, 8); the operational possibilities of the vehicle (1) and/or imposed safety requirements that limit the acceleration and turning speed and/or the braking needed to avoid contact with an obstacle.

10. Concept according to any one of the previous claims, **characterised in that** the motor (11) of a drive module (10) is built into the wheel (3) of the drive module (10).

11. Concept according to any one of the previous claims, **characterised in that** the suspension is a CHRISTIE type suspension.

12. Concept according to any one of the previous claims, **characterised in that** the segments (23) are hingeably connected together by means of a hinge (24) with one degree of freedom to be able to hinge around an axis perpendicular to the top surface of the platform.

13. Concept according to any one of the previous claims, **characterised in that** the wheels (3) of the drive modules (10) are caterpillar track wheels to be able to compose a tracked vehicle with caterpillar tracks that are guided by the track wheels.

14. Concept according to any one of the previous claims, **characterised in that** the vehicle (1) is equipped with four or more drive modules (10).

15. Concept according to any one of the claims 9 to 14, **characterised in that** the aforementioned algorithm of the motor controller (10) is programmed for different control modes such as front-wheel drive, rear-wheel drive, four-wheel drive or multiple-wheel drive whereby all driven wheels (3) always turn in the same direction, or such as a skid steer drive or caterpillar track drive whereby the drive wheels (3) on the one and the other side of the vehicle (1) can be driven in the same and in the opposite direction.

16. Concept according to any one of the previous claims, **characterised in that** the superstructure (4) is provided with the aforementioned operating controls (6, 7, 8) and at least one seat (5) for the driver, possibly supplemented by a seat (5) for one or more passengers or a stowage space for the transport of goods.

17. Concept according to any one of the previous claims, **characterised in that** the superstructure (4) is provided with a vehicle chassis with a roof and/or doors and/or a trunk.

18. Concept according to any one of the previous claims, **characterised in that** the vehicle (1) is provided with at least one connector (36) for connecting the supplies (19) to a charging station or charger (37).

19. Concept according to any one of the previous claims, **characterised in that** the wheel modules and drive modules for the left and right wheels are made symmetrical.

20. Electrically driven vehicle, **characterised in that** it is composed according to the concept according to any one of the previous claims.

21. Drive module that is suitable for composing a vehicle according to the concept of any one of the previous claims.


**Patentansprüche**

1. Konzept für ein elektrisch angetriebenes Fahrzeug, bestehend aus einer Basisplattform (2) mit Rädern (3) und einem darauf angebrachten Aufbau mit Bedienelementen (7, 8, 9) zum Lenken, zum Regeln der Geschwindigkeit und zum Bremsen, **dadurch gekennzeichnet, dass** das Konzept darauf basiert ist, mindestens die Basisplattform (2) mit einer begrenzten Anzahl von Typen von Modulen (10, 38) zusammenstellen zu können und ihre Breite und Länge modulieren zu können, wobei es auf Modulen (10, 38) mit einem Gehäuse (12) basiert ist, die entlang der Breite des zusammenzustellenden Fahrzeugs (1) an einer oder beiden Seiten seitlich zu starren oder gelenkigen Segmenten (23) von zwei oder mehr Modulen miteinander verbunden werden können, und die mit Verbindungsmitteln versehen sind, um zwei oder mehr der vorgenannten Segmente (23) in der Länge des Fahrzeugs hintereinander zu verbinden und um sie paarweise auf feste Weise oder mittels eines zentralen Gelenks (24) scharnierbar miteinander zu verbinden, und wobei mindestens vier Module (10) als Radmodule ausgeführt sind, jedes mit einem Rad (3) und einer Feder (15, 17, 18, 19) für dieses Rad (3), und wobei mindestens zwei dieser Radmodule (10) als Antriebsmodul (10) ausgeführt sind, jedes mit seiner eigenen Stromversorgung (29); einem Elektromotor (11) zum Antreiben des Rades (3); einer spezifischen unabhängigen Motorsteuerung (30) mit einem damit verbundenen Positions-/Bewegungssensor (31) zur Steuerung des betreffenden Motors (11) in Funktion der von den Bedienelementen (6, 7, 8) und von dem Bewegungssensor (31) und eventuell von anderen damit verbundenen Antriebsmodulen (10) stammenden Signale oder Daten.

2. Konzept nach Anspruch 1, **dadurch gekennzeichnet, dass** das Fahrzeug, mittels eines oder mehrerer Zwischenmodule (38), die zwischen den Rad- oder Antriebsmodulen (10) eines Segments (23) angebracht werden, breitenverstellbar ist.

3. Konzept nach Anspruch 2, **dadurch gekennzeichnet, dass** ein oder mehr Zwischenmodule (38) durch ein Gehäuse (12) gebildet werden, das als Batteriefach für zusätzliche Stromversorgung, als Gepäckraum, für Sensoren oder dergleichen eingerichtet werden kann.

4. Konzept nach Anspruch 1, **dadurch gekennzeichnet, dass** jedes Antriebsmodul (10) mit den erforderlichen Anschlüssen (36) zur Verwirklichung einer externen Kabelverbindung (35) zwischen der Motorsteuerung (30) des betreffenden Antriebsmoduls (10) und den von den Bedienelementen (6, 7, 8) stammenden Signalen oder Daten, und zur Verbindung zwischen der Motorsteuerung (30) des betreffenden Antriebsmoduls (10) und der Motorsteuerung (30) eines oder mehrerer anderer Antriebsmodule (10) versehen ist.

5. Konzept nach Anspruch 4, **dadurch gekennzeichnet, dass** die Kabelverbindungen (35) und Anschlüsse (36) dazu ausgerüstet sind, Signale oder Daten zwischen den Motorsteuerungen (30) der Antriebsmodule (10) untereinander und zwischen den Motorsteuerungen (30) und einer zentralen Steuerung einer Mensch-Maschine-Schnittstelle (33) auszutauschen, welche letztere die Signale von Bedienelementen (6, 7, 8) in Daten für die Motorsteuerungen (30) umwandelt und die Daten von den Antriebsmodulen (10) zu abrufbaren Daten hinsichtlich der Betriebssituation und Sicherheit des Fahrzeugs (1), wie etwa Geschwindigkeit, Verbrauch, Restkapazität der Stromversorgungen, Rutschgefahr, Defekte und dergleichen verarbeitet.

6. Konzept nach Anspruch 5, **dadurch gekennzeichnet, dass** die vorgenannten Kabelverbindungen (35) und Anschlüsse (36) dafür vorgesehen sind, auch die Stromversorgungen (19) miteinander zu verbinden, um den Stromverbrauch des Fahrzeugs (10) und/oder den von einer externen Ladestation oder Lader (37) stammenden Ladestrom über die verfügbaren Stromversorgungen (19) zu verteilen.

7. Konzept nach Anspruch 5 oder 6, **dadurch gekennzeichnet, dass** jedes Antriebsmodul (10) mit zwei Anschlüssen (36) versehen ist, die mit der Motorsteuerung (30) verbunden sind, um eine Daten- und Stromverbindung mit gleich welchem davorliegenden Segment (23) und/oder mit gleich welchem dahinterliegenden Segment (23) und/oder mit einer Mensch-Maschine-Schnittstelle (33) und/oder mit einer Ladestation oder Lader (37) für die Stromversorgungen zustande zu bringen.

8. Konzept nach einem der Ansprüche 5 bis 7, **dadurch gekennzeichnet, dass** jede Motorsteuerung (10) mit einem Algorithmus versehen ist, um, ausgehend von den von der Mensch-Maschine-Schnittstelle (33) und von anderen Motorsteuerungen (10) stammenden Daten, das erforderliche Drehmoment zu ermitteln und um die Motorsteuerungen (10) anderer damit verbundener Antriebsmodule (10) zu steuern, sodass im Fall eines Defekts oder schlechten Funktionierens einer Motorsteuerung (10) eine andere Motorsteuerung (10) die Rolle der defekten oder schlecht funktionierenden Motorsteuerung (10) übernehmen kann.

9. Konzept nach Anspruch 8, **dadurch gekennzeichnet, dass** der vorgenannte Algorithmus die von dem Fahrer mittels der Bedienelemente (6, 7, 8) auferlegten Steuerungsbefehle berücksichtigt; die Betriebsmöglichkeiten des Fahrzeugs (1) und/oder auferlegte Sicherheitsanforderungen, welche die Beschleunigung und Drehgeschwindigkeit einschränken, und/oder das zur Verhinderung des Kontakts mit einem Hindernis erforderliche Abbremsen.

10. Konzept nach einem der vorhergehenden Ansprüche, **dadurch gekennzeichnet, dass** der Motor (11) eines Antriebsmoduls (10) in das Rad (3) des Antriebsmoduls (10) eingebaut ist.

11. Konzept nach einem der vorhergehenden Ansprüche, **dadurch gekennzeichnet, dass** die Aufhängung eine Aufhängung vom CHRISTIE-Typ ist.

**12.** Konzept nach einem der vorhergehenden Ansprüche, **dadurch gekennzeichnet, dass** die Segmente (23) scharnierbar mittels eines Scharniers (24) mit einem Freiheitsgrad miteinander verbunden sind, sodass sie um eine Achse senkrecht zur Oberseite der Plattform scharnierbeweglich sind.

**13.** Konzept nach einem der vorhergehenden Ansprüche, **dadurch gekennzeichnet, dass** die Räder (3) der Antriebsmodule (10) Raupenkettenräder sind, um ein Raupenfahrzeug mit Raupen, die über die Raupenkettenräder geführt werden, zusammenstellen zu können.

**14.** Konzept nach einem der vorhergehenden Ansprüche, **dadurch gekennzeichnet, dass** das Fahrzeug (1) mit vier oder mehr Antriebsmodulen (10) ausgerüstet ist.

**15.** Konzept nach einem der Ansprüche 9 bis 14, **dadurch gekennzeichnet, dass** der vorgenannte Algorithmus der Motorsteuerung (10) für verschiedene Steuermodi programmiert ist, wie etwa Vorderradantrieb, Hinterradantrieb, Allradantrieb oder Mehrradantrieb, wobei sich alle angetriebenen Räder (3) stets in derselben Richtung drehen, oder wie etwa eine Antriebslenkung oder ein Raupenkettenantrieb, wobei die Antriebsräder (3) an der einen und der anderen Seite des Fahrzeugs (1) sowohl in derselben als auch in der entgegengesetzten Richtung angetrieben werden können.

**16.** Konzept nach einem der vorhergehenden Ansprüche, **dadurch gekennzeichnet, dass** der Aufbau (4) mit den vorgenannten Bedienelementen (6, 7, 8) und mit mindestens einem Sitz (5) für den Fahrer versehen ist, eventuell um einen Sitz (5) für einen oder mehr Passagiere oder um einen Stauraum für den Transport von Gütern ergänzt.

**17.** Konzept nach einem der vorhergehenden Ansprüche, **dadurch gekennzeichnet, dass** der Aufbau (4) mit einem Fahrzeugchassis mit einem Dach und/oder Türen und/oder einem Kofferraum versehen ist.

**18.** Konzept nach einem der vorhergehenden Ansprüche, **dadurch gekennzeichnet, dass** das Fahrzeug (1) mit mindestens einem Anschluss (36) zum Anschließen der Stromversorgungen (19) an eine Ladestation oder Lader (37) versehen ist.

**19.** Konzept nach einem der vorhergehenden Ansprüche, **dadurch gekennzeichnet, dass** die Radmodule und Antriebsmodule für die linken und rechten Räder symmetrisch ausgeführt sind.

**20.** Elektrisch angetriebenes Fahrzeug, **dadurch gekennzeichnet, dass** es gemäß dem Konzept nach einem der vorhergehenden Ansprüche zusammengestellt ist.

**21.** Antriebsmodul, das zum Zusammenstellen eines Fahrzeugs gemäß dem Konzept nach einem der vorhergehenden Ansprüche geeignet ist.

## Revendications

**1.** Concept pour un véhicule entraîné par voie électrique, constitué par : une plate-forme de base (2) comportant des roues (3) et une superstructure fixée sur ladite plate-forme, comprenant des commandes de fonctionnement (7, 8, 9) pour la conduite, le réglage de la vitesse et le freinage, **caractérisé en ce que** le concept se base sur sa capacité à composer au moins la plate-forme de base (2) avec un nombre limité de types de modules (10, 38) et sur sa capacité à moduler sa largeur et sa longueur ; dans lequel il se base sur des modules (10, 38) comportant un logement (12) qui peuvent être reliés de manière réciproque latéralement sur un côté ou sur les deux côtés sur la largeur du véhicule (1) qui doit être composé, afin d'obtenir des segments rigides ou articulés (23) de deux modules ou plus, et qui sont munis de moyens de liaison destinés à relier deux des segments susmentionnés (23) ou plus sur la longueur du véhicule les uns derrière les autres et pour les relier en articulation de manière réciproque par paires de façon fixe ou au moyen d'une articulation centrale (24) ; et dans lequel au moins quatre modules (10) sont construits sous la forme de modules de roues, chacun comportant une roue (3) et un ressort (15, 17, 18, 19) pour cette roue (3) ; et dans lequel au moins deux de ces modules de roues (10) sont construits sous la forme d'un module de traction (10), chacun avec sa propre alimentation en électricité (29) ; un moteur électrique (11) pour l'entraînement de la roue (3) ; un dispositif de commande de moteur indépendant spécifique (30) auquel est relié un capteur de position/mouvement (31), destiné à commander le moteur (11) concerné en fonction des signaux ou des données émanant des commandes de fonctionnement (6, 7, 8) et du capteur de mouvement (31) et, le cas échéant, à partir d'autres modules de commande (10) qui y sont reliés.

**2.** Concept selon la revendication 1, **caractérisé en ce que** le véhicule peut être ajusté en largeur au moyen d'un ou de plusieurs modules intermédiaires (38) qui sont fixés entre les modules de roues ou d'entraînement (10) d'un segment (23).

**3.** Concept selon la revendication 2, **caractérisé en ce qu'**un ou plusieurs modules intermédiaires (38) sont réalisés via un logement (12) qui peut être conçu sous la forme d'un logement de batterie pour une alimentation supplémentaire, sous la forme d'un compartiment à bagages, pour des capteurs ou analogues.

**4.** Concept selon la revendication 1, **caractérisé en ce que** chaque module de commande (10) est muni des raccords nécessaires (36) pour amener une liaison externe par câble (35) entre le dispositif de commande de moteur (30) du module de commande concerné et les signaux ou les données qui émanent des commandes de fonctionnement (6, 7, 8) et pour la liaison entre le dispositif de commande de moteur (30) du module de commande (10) concerné et le dispositif de commande de moteur (30) d'un ou de plusieurs autres modules de commande (10).

**5.** Concept selon la revendication 4, **caractérisé en ce que** les liaisons par câble (35) et les raccords (36) sont équipés pour échanger des signaux ou des données entre les dispositifs de commande de moteur (30) des modules de commande (10) de manière réciproque et entre les dispositifs de commande de moteurs (30) et un contrôleur central d'une interface être humain-machine (33) qui convertit les signaux émis par les commandes de fonctionnement (6, 7, 8) en données pour les dispositifs de commande de moteurs (30) et qui traite les données émanant des modules de commande (10) pour obtenir des données lisibles concernant la situation opérationnelle et la sécurité du véhicule (1), comme par exemple la vitesse, la consommation, la capacité restante des alimentations, le danger de dérapage, des pannes et analogues.

**6.** Concept selon la revendication 5, **caractérisé en ce que** les liaisons par câble susmentionnées (35) et les raccords (36) sont prévus pour également relier de manière réciproque les alimentations (19) les unes avec les autres dans le but de distribuer la consommation d'énergie du véhicule (10) et/ou le courant de charge émanant d'un chargeur ou d'une station de recharge externe (37), parmi les alimentations disponibles (19).

**7.** Concept selon la revendication 5 ou 6, **caractérisé en ce que** chaque module de commande (10) est muni de deux raccords (36) qui sont reliés audit dispositif de commande de moteur (30) pour amener une liaison de données et d'électricité, respectivement, à n'importe quel segment (23) à portée de main et/ou à n'importe quel segment (23) situé en arrière et/ou à une interface être humain-machine (33) et/ou à un chargeur ou un poste de recharge (37) pour les alimentations.

**8.** Concept selon l'une quelconque des revendications 5 à 7, **caractérisé en ce que** chaque dispositif de commande de moteur (10) est muni d'un algorithme qui permet de déterminer, au départ des données émanant de l'interface être humain-machine (33) et d'autres dispositifs de commande de moteurs (10), le couple qui est requis et pour la commande des dispositifs de commande de moteurs (10) d'autres modules de commande (10) qui y sont reliés, d'une manière telle que dans le cas d'un fonctionnement défectueux ou d'un mauvais fonctionnement d'un dispositif de commande de moteur (10), un autre dispositif de commande de moteur (10) peut reprendre le rôle du dispositif de commande de moteur (10) dont le fonctionnement est défectueux ou qui manifeste un mauvais fonctionnement.

**9.** Concept selon la revendication 8, **caractérisé en ce que** l'algorithme susmentionné prend en compte les instructions de commande imposées par le conducteur au moyen des commandes de fonctionnement (6, 7, 8) ; les possibilités opérationnelles du véhicule (1) et/ou les exigences de sécurité imposées qui limitent l'accélération et la vitesse en virage et/ou le freinage requis pour éviter un contact avec un obstacle.

**10.** Concept selon l'une quelconque des revendications précédentes, **caractérisé en ce que** le moteur (11) d'un module de commande (10) est incorporé dans la roue (3) du module de commande (10).

**11.** Concept selon l'une quelconque des revendications précédentes, **caractérisé en ce que** la suspension est une suspension de type CHRISTIE.

**12.** Concept selon l'une quelconque des revendications précédentes, **caractérisé en ce que** les segments (23) sont reliés en articulation les uns aux autres au moyen d'une articulation (24) avec un degré de liberté pour pouvoir obtenir une articulation autour d'un axe perpendiculaire à la surface supérieure de la plate-forme.

**13.** Concept selon l'une quelconque des revendications précédentes, **caractérisé en ce que** les roues (3) des modules de commande (10) sont des roues à chenilles qui permettent de composer un module sur chenilles à des chenilles qui sont guidées par des roues à chenilles.

**14.** Concept selon l'une quelconque des revendications précédentes, **caractérisé en ce que** le véhicule (1) est équipé de quatre modules de commande (10) ou plus.

**15.** Concept selon l'une quelconque des revendications 9 à 14, **caractérisé en ce que** l'algorithme susmentionné du dispositif de commande de moteur (10) est programmé pour différents modes de commande, tels qu'un entraînement du type à traction avant, un entraînement du type à propulsion, un entraînement du type à quatre roues motrices ou un entraînement du type à plusieurs roues motrices ; dans lequel toutes les roues menées (3) tournent toujours dans la même direction, ou tels qu'un entraînement à l'aide de patins ou un entraînement sur chenilles ; dans lequel les roues motrices (3) d'un côté et de l'autre côté du véhicule (1) peuvent être entraînées dans la même direction et dans la direction opposée.

**16.** Concept selon l'une quelconque des revendications précédentes, **caractérisé en ce que** la superstructure (4) est munie des commandes de fonctionnement susmentionnées (6, 7, 8) et d'au moins un siège (5) pour le conducteur, le cas échéant additionné d'un siège (5) pour un ou plusieurs passagers ou d'un espace de rangement pour le transport de marchandises.

**17.** Concept selon l'une quelconque des revendications précédentes, **caractérisé en ce que** la superstructure (4) est munie d'une carrosserie de véhicule comportant un toit et/ou des portières et/ou un coffre.

**18.** Concept selon l'une quelconque des revendications précédentes, **caractérisé en ce que** le véhicule (1) est muni d'au moins un raccord (36) pour le raccordement des alimentations (19) à un poste de recharge ou à un chargeur (37).

**19.** Concept selon l'une quelconque des revendications précédentes, **caractérisé en ce que** les modules de roues et les modules de commande pour les roues gauches et droites sont réalisés de manière symétrique.

**20.** Véhicule entraîné par voie électrique, **caractérisé en ce qu'**il est composé conformément au concept selon l'une quelconque des revendications précédentes.

**21.** Module de commande qui est approprié pour la composition d'un véhicule conformément au concept selon l'une quelconque des revendications précédentes.

Fig.1

Fig.2

Fig.3

Fig.4

**Fig.5**

**Fig.6**

*Fig.7*

Fig.8

*Fig.9*

*Fig.10*

*Fig.11*

*Fig.12*

*Fig.13*

Fig.14

**EP 3 191 334 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8397844 B2